# EUROPEAN PATENT SPECIFICATION

(11) **EP 3 248 466 B1**
(45) Date of publication and mention of the grant of the patent: **26.02.2020**
(21) Application number: 17170467.9
(22) Date of filing: 10.05.2017
(51) Int. Cl.: A21B 1/22, F24C 7/06

(54) **DOMESTIC ELECTRIC OVEN STRUCTURE PARTICULARLY FOR PIZZAS**
ELEKTROHERD FÜR DEN HAUSHALT, INSBESONDERE FÜR PIZZA
STRUCTURE DE FOUR ÉLECTRIQUE DOMESTIQUE, EN PARTICULIER POUR DES PIZZAS

(30) Priority: 23.05.2016 IT UA20163668
(43) Date of publication of application: 29.11.2017
(73) Proprietor: Moretti Forni S.p.A., 61037 Mondolfo (PU) (IT)
(72) Inventor: Moretti, Mario, 61021 Pesaro (IT)
(74) Representative: Ripamonti, Enrico

(56) References cited:
- EP-A1- 1 468 610
- DE-A1- 19 839 071
- US-A1- 2005 224 064
- US-A1- 2011 146 653
- US-B1- 6 745 758

## Description

### DETAILED DESCRIPTION

### Field of the art

Domestic electric ovens for cooking foodstuffs are obtained in various ways, but almost all of them have the purpose of polyvalence in use combined with reducing consumption, with the evident purpose of providing families with equipment basically suitable for cooking any type of foodstuff, even with reference to various types of regional and national cuisine traditions.

Such electric ovens according to the prior art, in thus envisaged universal perspective of use for cooking any foodstuff that can be prepared in an oven, are also used for preparing pizzas, though with generally unsatisfactory and markedly unsatisfactory results, in that the pizza, though representing a simple and humble traditional foodstuff, is bound to equally traditional and unique cooking principles that are unfit to be integrated by wide functionality spectrum equipment.

The very structure of ordinary domestic electric ovens is unfit for preparing pizzas, due to the height of the opening, with ensuing distance between the floor and the roof, so as to enable the introduction of any dimension of baking pans and trays when, on the contrary, the pizza oven requires a low cooking chamber, with little distance between the floor and the roof, so as to enable direct and immediate heat conduction and radiation.

On the contrary, on the other hand, there are electrical cooking equipment that are so dedicated, to maximise heat and reduce consumption, that they are structured as valves that limit the pizza to be prepared; this with an evident drawback of enabling preparing only one pizza at a time, among other drawbacks.

DE 198 39 071 A1 discloses a small electric oven for cooking small foodstuffs and adapted to be introduced into the muffle of a conventional furnace.

EP1468610 discloses an oven especially for pizzas, which comprises a cooking chamber comprising a lower plane, an upper plane, lateral walls and a bottom wall, a perforated metal plate placed on the lower plane or bottom, shaped channels formed on the lower or bottom plane, lower heating elements (placed below the perforated metal plate) and upper heating elements arranged near the upper plane and above the perforated metal plate, temperature probes for controlling the heating temperature of the oven.

US2005/224064 discloses an oven comprising a coking chamber enclosed by lateral and bottom walls and lower (base) and upper walls, upper and lower heating elements (electrical resistors), supporting elements for a cooking plane or floor, said supporting elements being fixed to the internal walls of the cooking chamber so as to support the supporting elements of the cooking plane of floor and for keeping a distance between said supporting elements and the cooking chamber walls, a fan for the heating distribution.

US2011/0146653 discloses a cooking device suitable for allowing food cooking both on the upper and lower part of the food and comprising a cooking chamber, a tray loaded in the cooking chamber, an upper heater disposed above the tray, a lower heater disposed below the tray and an heater controller controlling the output of the upper and lower heater so that the temperature of the tray does not reach the fuming or igniting temperature of the fat stuck of the surface of the tray.

US6,745,758 discloses a cooking oven for food items which comprises an insulation structure supported on the bottom floor and having a floor positioned above said bottom floor and rotatable relative thereto, an infrared heating element positioned below said floor oriented to radiate the floor, a rear heating element which is positioned in a rear portion of said insulation structure in an horizontal plane with said floor and intermediate said insulation structure and said floor, the insulation structure and the floor which define a cavity and with the insulation structure having an access opening to said cavity and, finally, a vent system positioned above the access opening.

### Objects of the invention

Thus, in the context above, an object of the present invention is to provide an innovative domestic oven structure designated for cooking pizzas, i.e. specifically for making pizzas.

Another object of the present invention is to attain the aforementioned object through an innovative concept that also enables cooking other foodstuffs, but also secondarily and compatibly designated for attaining the best possible cooking of a pizza using a non-professional oven.

Another object of the present invention is to attain the previous objects through an innovative concept that is simple and efficient, safe in use and at a relatively economic cost considering the results practically attainable therewith.

### Summary of the solution concept

These and other objects are attained through the domestic electric oven structure, particularly for pizzas, according to the present invention, comprising armoured tubular electrical resistors (8, 10), with adjustably independent power supply and separate sensors (9, 11), directly arranged in the cooking chamber (2), at least one (8) at the roof (6) and at least one (10) at the bottom of the floor (7), above which there is suspended a refractory sheet (15) detached from the walls (3, 4, 5) of the cooking chamber (2) by an opening interspace (13) and detached from the bottom (7) by an interspace (14) not greater than three times the thickness thereof, said armoured tubular electrical resistors (8, 10) being shaped with continuous segment (16) facing the extension of the opening compartment (3) of the cooking chamber (2) in tangency proximity of the loops (17) of the flat circuit outlined by the resistors (8, 10).

### Description of the attached drawings

Further characteristics and advantages of the domestic electric oven structure, particularly for pizzas, according to the present invention shall be more apparent from the following detailed description of a preferred but non-exclusive embodiment thereof, represented solely by way of non-limiting example with reference to the eight attached drawings, wherein:

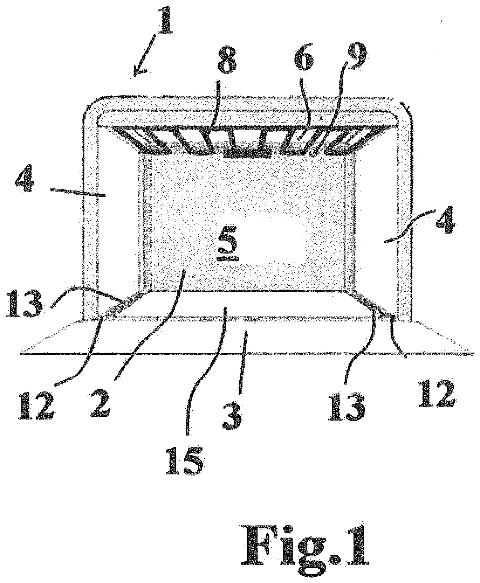

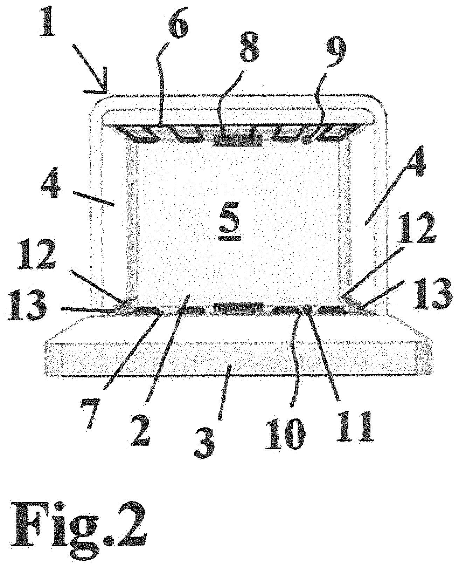

Figures 1 and 2 illustrate respective front perspective views of a schematically illustrated embodiment of a domestic electric oven particularly for pizzas, according to the present invention;

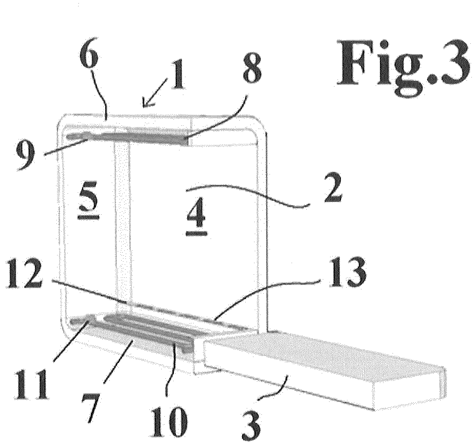

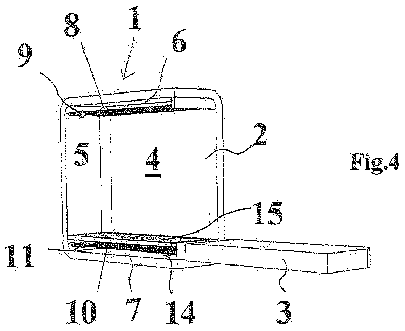

Figures 3 and 4 represent the respective sectional perspective views thereof;

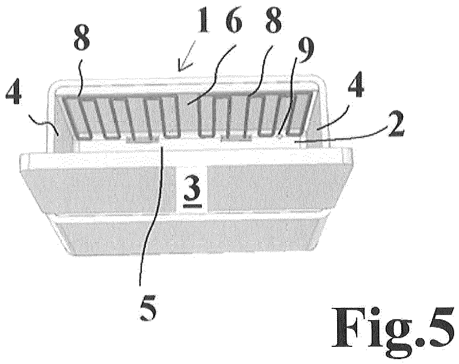

Figure 5 shows one of the possible alternative implementations of a domestic electric oven, particularly for pizzas, according to the present invention;

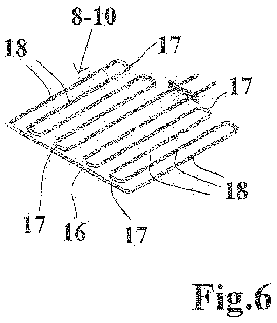

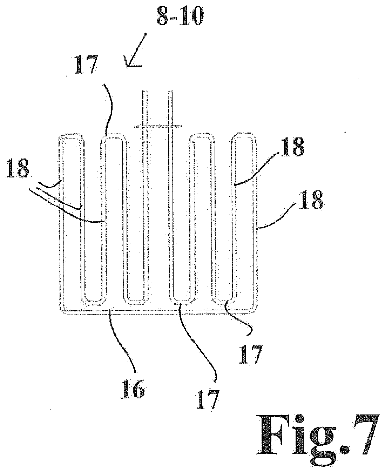

Figures 6 to 8 illustrate respective details of the constituting elements.

### Static description of the embodiment

With reference to such figures, a schematically illustrated embodiment of a domestic oven for making pizzas, according to the present invention, is indicated in its entirety with 1.

The oven 1 comprises a cooking chamber 2, closed - at the front part - by a tipping door 3, defined by lateral walls 4 and a rear wall 5, with height substantially corresponding to the usual polyvalent kitchen domestic electric ovens for cooking foodstuffs.

The cooking chamber 2 is also defined - at the upper part - by a roof 6 and - at the lower part - by a floor 7.

Near the roof 6 of the cooking chamber 2 there is housed - suspended - at least one upper armoured tubular electrical resistor 8, to be deemed independently power supplied by means of manual control and preferably assisted by a computerised logic on parameters comprising detections by an upper heat sensor 9.

Near the floor 7 of the cooking chamber 2 there is housed - suspended - at least one lower armoured tubular electrical resistor 10, to be deemed independently power supplied by means of manual control and preferably assisted by a computerised logic on parameters comprising detections by a lower heat sensor 11 and interpolated in a combined fashion with parameters and detections of the upper armoured tubular electrical resistor 8 and the upper heat sensor 9.

Above the lower armoured tubular electrical resistor 10, at the floor 7, there are provided on the lateral walls 4 respective lateral shelves 12 that are mutually symmetrical and provided with slots 13.

The lateral shelves 12 are uniformly levelled and substantially arranged at the lower opening of the door 3.

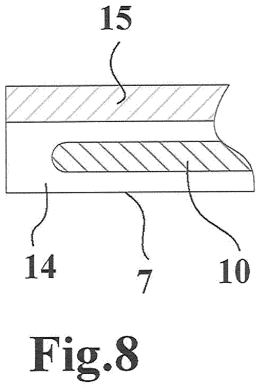

The lateral shelves 12 are shaped to support a plate 15 made of refractory material, preferably detached from the bottom of the floor 7 by a double bottom interspace 14 not greater than three times the thickness X thereof and even more preferably, not twice the thickness thereof; wherein the diameter D of the underlying lower armoured resistor 10 housed in the open double bottom 14 is preferably from half to the level of the thickness X of the plate 15 made of refractory material (see figure 8).

In addition, beneath the upper armoured tubular electrical resistor 8, near the roof 6 of the cooking chamber 2, there may be possibly housed, through suitable supports, a plate made of refractory material, not illustrated in that not indispensable for the operation of the equipment, but solely enhancing performance from given points of view.

Both the upper 8 as well as the lower 10 armoured tubular electrical resistors are shaped with continuous segment 16 facing the entire extension of the opening compartment of the door 3 of the cooking chamber 2 in tangency proximity of the front loops 17 of the flat circuit outlined by the resistors 8, 10.

Preferably, in the resistors 8 and 10 the segment 16 facing the door 3 of the cooking chamber 2 is detached from the loops 17 by one and a half times the diameter D of the resistors 8, 10;
even more preferably, the interspace between the parallel segments 18 connected to consecutive loops 17 measures five times the diameter D of the resistors 8, 10.

Further preferably, the interspace between rear loops 17 of the flat circuit outlined by the resistors 8, 10 and the rear wall 5 of the cooking chamber 2 is twice the diameter D of the resistors 8, 10, for the functions illustrated below.

### Dynamic description of the embodiment

Thus, having completed the static description of a preferred embodiment of the domestic electric oven, particularly for pizzas, according to the present invention, following is the dynamic description of the same, i.e. the relative operation.

The arrangement of the upper 8 and lower 10 armoured tubular electrical resistors directly in the cooking chamber 2 and the detachment above the floor 7 of the plate made of refractory cooking material 15 from the walls 4 and/or 5 and/or 3 of the cooking chamber 2, same case applying to the possible upper plate made of refractory material concealed by the roof 6, enables the electrical resistors 8 and 10 to provide a more efficient heating thermal action even by radiation and convection, thus not by conduction alone.

The conformation of the upper 8 and lower 10, armoured tubular electrical resistors with respective segments 16 facing the extension of the opening compartment of the door 3, increases the functionality of the electrical resistors 8 and 10, spreading concentrated heat where there is greater dispersion, that is for opening the cooking chamber 2 near the door 3 and due to temperature difference.

In the meanwhile, the plate 15 made of refractory cooking material, same case applying to the potential plate made of refractory material of higher value (not illustrated) with optimised thickening - even considering the double bottom interspace 14 of the floor 7 and the diameter of the resistors 8 and 10, create a marked thermal wheel effect, which optimises the functionality of the cooking equipment in reiterations, i.e. in case of a plurality of subsequent pizza making sessions.

Furthermore, the power supply of the upper 8 and lower 10 armoured tubular electrical resistors implemented with the separate upper 9 and lower 11 heat sensors for the heat emission areas, enable diversifying, like in professional ovens, the emission of heat between the upper 8 and lower 10 sources; thus, in a context of greater power supply usually required for the optimal cooking of pizza, considering the difference of the cooking heat required by the overlying condiments with respect to the underlying dough, power supply for particular condiments, i.e. particular formats such as the so-called "calzone" for example where the dough is present above and beneath and the condiment represents an enclosed stuffing.

In this context, the equipment thus conceived can also be provided with the most modern electronic cooking technology, for example with the optimised functionality method conceived for professional electric pizza ovens of the Applicant of this document and subject of European patent application EP 17 158 856.9 filed on 02 March 2017. The aforementioned generally comprising an absorption self-limitation of the oven, with automatic balanced distribution of electrical power supply between the heating resistors of the oven cooking chamber roof and the resistors of the oven cooking chamber floor, upon the occurrence of absorption peak exceeding the maximum calibrated oven absorption, which is actuated and controlled by electronic means which interpolate power reduction in a balanced fashion between the floor and the roof depending on the contingent and/or original manual setting, and/or the type of product undergoing cooking and/or depending on the potential capacity to implement itself to the weighted mean of corrective actions carried out manually under previous similar conditions.

It should be observed that the dimensions of the domestic oven according to the present invention, though conceived specifically for making pizzas, also enable cooking substantially any foodstuffs and dishes.

### Alternative embodiments

It is obvious that in further alternative embodiments still falling within the innovation concept subject of the embodiment illustrated above and claimed below, the domestic electric oven structure, particularly for pizzas, according to the present invention, may be implemented through equivalent methods and structural techniques, i.e. with further supplementary solutions, same case applying to application parameters that can be varied to suit the purpose.

### Advantages of the invention

As clear from the detailed description of the preferred embodiment above and the description of some variant embodiments, the domestic electric oven structure, particularly for pizzas, according to the present invention offers advantages corresponding to the attainment of the preset objects as well as others: it incorporates a domestic equipment suitable for attaining the quality cooking of the particular product to be cooked in an oven, a pizza that is, at substantially professional levels, adapting to the domestic needs of reducing energy consumptions of the domestic appliances which is usually limited, but without jeopardising the attainment of the heat required by the particular results attained and pursued, as well as the repeated utilisation of the equipment; the entirety simultaneously maintaining the practicality of the equipment even when cooking other foodstuffs and dishes.

### KEY TO REFERENCE NUMBERS

1) oven in its entirety
2) cooking chamber
3) door
4) lateral walls of the cooking chamber
5) rear wall of the cooking chamber
6) roof of the cooking chamber
7) floor of the cooking chamber
8) upper armoured tubular electrical resistor
9) upper heat sensor
10) lower armoured tubular electrical resistor
11) lower heat sensor
12) lateral shelves
13) slots of the lateral shelves
14) double bottom interspace between the floor bottom and the refractory plate
15) plate made of refractory material
16) segment of the resistors facing the extension of the opening compartment
17) loops of the resistors
18) parallel segments of the resistors

## Claims

1. Domestic electric oven structure, particularly for pizzas, **characterized in that** it comprises tubular electrical resistors (8, 10), with an adjustably independent power supply and separate independent heat sensors (9, 11) directly arranged in the cooking chamber (2), at least one tubular resistor and sensor (8, 9) placed inside the cooking chamber (2) near the roof (6) and at least one tubular resistor and sensor (10, 11) at the bottom of the floor (7), above which there is suspended - through retaining means to the walls (3, 4, 5) and/or to the bottom (7) - a refractory sheet (15) supported by means of respective lateral shelves (12) mutually symmetric and/or coplanar and provided with slots (13) provided on the lateral (4) and/or bottom (5) and/or front walls above the lower tubular electrical resistor (10) at the floor (7), wherein the refractory sheet (15) is detached from the walls (3, 4, 5) of the cooking chamber (2) by an open interspace of the lateral shelves (12) and detached from the bottom (7) by an interspace (14), wherein the tubular electrical resistor (10) is housed in said interspace (14).

2. Domestic electric oven structure according to claim 1, **characterized in that** the refractory sheet (15) is detached from the bottom (7) by the interspace (14) not greater than three times the thickness thereof, said tubular electrical resistors (8, 10) being shaped with continuous segment (16) facing the extension of the opening compartment of the door (3) of the cooking chamber (2) in tangency proximity of the loops (17) of the flat circuit outlined by the resistors (8, 10).

3. Domestic electric oven structure according to claim 1 or 2, **characterised in that** it comprises:
- the cooking chamber (2) closed - at the front part- by a door (3) defined by lateral walls (4) and a rear wall (5), with height between the upper roof (6) and the lower floor (7) substantially corresponding to that of the usual polyvalent kitchen domestic electric ovens for cooking foodstuffs;
- the at least one upper tubular electrical resistor (8) housed suspended near the roof (6) of the cooking chamber (2) autonomously power-supplied by means of manual control and/or assisted by a computerised logic on parameters comprising the detections of an upper heat sensor (9);
- the at least one lower tubular electrical resistor (10) housed suspended near the floor (7) of the cooking chamber (2) autonomously power-supplied by means of manual control and/or assisted by a computerised logic on parameters comprising the detections of a lower heat sensor (11) and interpolated in a combined fashion with parameters and detections of the upper tubular electrical resistor (8) and the upper heat sensor (9).
- respective lateral shelves (12) mutually symmetric and/or coplanar and provided with slots (13) provided on the lateral (4) and/or bottom (5) and/or front walls above the lower armoured tubular electrical resistor (10) at the floor (7) shaped to support a sheet (15) made of refractory material.

4. Domestic electric oven structure according to any one of the preceding claims, **characterised in that** beneath the upper tubular electrical resistor (8) near the roof (6) of the cooking chamber (2), there is suspended a sheet (15) made of refractory material.

5. Domestic electric oven structure according to any one of the preceding claims, **characterised in that:**
- said sheet (15) made of refractory material is detached from the bottom of the floor (7) by an interspace (14) of a double bottom not greater than three time the thickness (X) thereof and, even more preferably, not greater than twice;
- the diameter (D) of the underlying lower resistor (10) housed in the open doublebottom (14) is preferably - from half up to the height of the thickness (X) of the sheet (15) - made of refractory material.

6. Domestic electric oven structure according to any one of the preceding claims, **characterised in that** said upper tubular electrical resistors (8) and said lower armoured tubular electrical resistors (10) are shaped with a continuous segment (16) facing the extension of the opening compartment of the door (3) of the cooking chamber (2) in tangency proximity of the lower loops (17) of the flat circuit outlined by the upper (8) and lower (10) tubular electrical resistors.

7. Domestic electric oven structure according to any of the preceding claim, **characterised in that** in said upper tubular electrical resistors (8) and in said lower tubular electrical resistors (10), the continuous segment (16) facing the extension of the opening compartment of the door (3) of the cooking chamber (2) is detached from the loops (17) of the upper (8) and lower (10) tubular electrical resistors by one and a half times the diameter (D) of the upper (8) and lower (10) tubular electrical resistors.

8. Domestic electric oven structure according to any one of the preceding claims, **characterised in that** in said upper tubular electrical resistors (8) and in said lower tubular electrical resistors (10), the interspace between the parallel segments (18) connected to consecutive loops (17) is five times the size of the diameter (D) of the upper (8) and lower (10) tubular electrical resistors.

9. Domestic electric oven structure according to any one of the preceding claims, **characterised in that** in said upper tubular electrical resistors (8) and in said lower tubular electrical resistors (10), the interspace between the rear loops (17) of the flat circuit outlined by the upper (8) and lower (10) tubular electrical resistors and the rear wall (5) of the cooking chamber (2) is twice the diameter (D) of the upper (8) and lower (10) tubular electrical resistors.

## Patentansprüche

1. Haushaltselektroofenstruktur, insbesondere für Pizzen, **dadurch gekennzeichnet, dass** sie rohrförmige elektrische Widerstände (8, 10) aufweist, mit einer einstellbaren unabhängigen Stromversorgung und separaten unabhängigen Wärmesensoren (9, 11), die direkt in dem Garraum (2) angeordnet sind, wobei mindestens ein rohrförmiger Widerstand und Sensor (8, 9) in dem Garraum (2) in der Nähe des Dachs (6) und mindestens ein rohrförmiger Widerstand und Sensor (10, 11) an der Unterseite des Bodens (7) platziert ist, worüber - durch Haltemittel an den Wänden (3, 4, 5) und/oder an der Boden (7) - eine feuerfeste Platte (15) aufgehängt ist, die mittels gegenseitig symmetrischer und/oder koplanarer jeweiliger Seitenborde (12) gestützt ist, und mit Schlitzen (13) versehen ist, die an den Seitenwänden (4) und/oder der Bodenwand (5) und/oder der Stirnwand oberhalb des unteren rohrförmigen elektrischen Widerstands (10) an dem Boden (7) bereitgestellt sind, wobei die feuerfeste Platte (15) durch einen offenen Zwischenraum der seitlichen Borde (12) von den Wänden (3, 4, 5) des Garraums (2) getrennt ist und durch einen Zwischenraum (14) von dem Boden (7) getrennt ist, wobei der rohrförmige elektrische Widerstand (10) in dem Zwischenraum (14) untergebracht ist.

2. Haushaltselektroofenstruktur nach Anspruch 1, **dadurch gekennzeichnet, dass** die feuerfeste Platte (15) von dem Boden (7) durch den Zwischenraum (14) von nicht mehr als dem Dreifache der Dicke davon getrennt ist, wobei die rohrförmigen elektrischen Widerstände (8, 10) mit einem durchgehenden Segment (16) geformt sind, das der Verlängerung des Öffnungsfachs der Tür (3) des Garraums (2) in tangentialer Nähe der Schlaufen (17) der von den Widerständen (8, 10) umrissenen flachen Schaltung gegenüberliegt.

3. Haushaltselektroofenstruktur nach Anspruch 1 oder 2, **dadurch gekennzeichnet, dass** sie Folgendes umfasst:
- den Garraum (2) geschlossen - an der Vorderseite - durch eine Tür (3), die durch Seitenwände (4) und eine Rückwand (5) definiert ist, wobei die Höhe zwischen dem oberen Dach (6) und dem unteren Boden (7) im Wesentlichen denen der üblichen polyvalenten Haushaltselektroöfen zum Kochen von Lebensmitteln entspricht;
- den mindestens einen oberen rohrförmigen elektrischen Widerstand (8), der in der Nähe des Dachs (6) des Garraums (2) aufgehängt ist und autonom mittels einer manuellen Steuerung und/oder unterstützt durch eine computergestützte Logik von Parametern umfassend die Erfassungen eines oberen Wärmesensors (9) mit Strom versorgt wird;
- den mindestens einen unteren rohrförmigen elektrischen Widerstand (10), der in der Nähe des Bodens (7) des Garraums (2) aufgehängt untergebracht ist und autonom mittels einer manuellen Steuerung und/oder unterstützt durch eine computergestützte Logik von Parametern umfassend die Erfassungen eines unteren Wärmesensors (11) mit Strom versorgt wird und auf eine kombinierte Weise mit Parametern und Erfassungen des oberen rohrförmigen elektrischen Widerstands (8) und des oberen Wärmesensors (9) interpoliert werden;
- jeweilige gegenseitig symmetrische und/oder koplanare seitliche Borde (12) und versehen mit Schlitzen (13), die an den Seitenwänden (4) und/oder der Bodenwand (5) und/oder Stirnwand oberhalb des unteren gepanzerten rohrförmigen elektrischen Widerstands (10) an dem Boden (7) bereitgestellt sind, der geformt ist, um eine Platte (15) aus feuerfestem Material zu tragen.

4. Haushaltselektroofenstruktur nach einem der vorherigen Ansprüche, **dadurch gekennzeichnet, dass** unter dem oberen rohrförmigen elektrischen Widerstand (8) in der Nähe des Dachs (6) des Garraums (2) eine Platte (15) aus feuerfestem Material aufgehängt ist.

5. Haushaltselektroofenstruktur nach einem der vorherigen Ansprüche, **dadurch gekennzeichnet, dass**:
- die Platte (15) aus feuerfestem Material von der Unterseite des Bodens (7) durch einen Zwischenraum (14) eines doppelten Bodens nicht größer als das Dreifache von deren Dicke (X) und noch bevorzugter nicht größer als das Zweifache getrennt ist;
- der Durchmesser (D) des darunterliegenden unteren Widerstands (10), der in dem offenen doppelten Boden (14) untergebracht ist, vorzugsweise - von der Hälfte bis zur Höhe der Dicke (X) der Platte (15) - aus feuerfestem Material ist.

6. Haushaltselektroofenstruktur nach einem der vorherigen Ansprüche, **dadurch gekennzeichnet, dass** die oberen rohrförmigen elektrischen Widerstände (8) und die unteren gepanzerten rohrförmigen elektrischen Widerstände (10) mit einem durchgehenden Segment (16) geformt sind, das der Verlängerung des Öffnungsfachs der Tür (3) des Garraums (2) in tangentialer Nähe der unteren Schleifen (17) der durch den oberen (8) und unteren (10) rohrförmigen elektrischen Widerstand umrissenen flachen Schaltung gegenüberliegt.

7. Haushaltselektroofenstruktur nach einem der vorherigen Ansprüche, **dadurch gekennzeichnet, dass** in den oberen elektrischen Rohrwiderständen (8) und in den unteren rohrförmigen elektrischen Widerständen (10) das der Verlängerung des Öffnungsfachs der Tür (3) des Garraums (2) zugewandte durchgehende Segment (16) von den Schleifen (17) des oberen (8) und des unteren (10) rohrförmigen elektrischen Widerstands um das Eineinhalbfache des Durchmessers (D) des oberen (8) und des unteren (10) rohrförmigen elektrischen Widerstands getrennt ist.

8. Haushaltselektroofenstruktur nach einem der vorherigen Ansprüche, **dadurch gekennzeichnet, dass** in den oberen elektrischen Rohrwiderständen (8) und in den unteren elektrischen Rohrwiderständen (10) der Zwischenraum zwischen den parallelen Segmenten (18), die mit aufeinanderfolgenden Schleifen (17) verbunden sind, fünfmal so groß ist wie der Durchmesser (D) des oberen (8) und des unteren (10) rohrförmigen elektrischen Widerstands.

9. Haushaltselektroofenstruktur nach einem der vorherigen Ansprüche, **dadurch gekennzeichnet, dass** in dem oberen rohrförmigen elektrischen Widerstand (8) und in dem unteren rohrförmigen elektrischen Widerstand (10) der Zwischenraum zwischen den hinteren Schleifen (17) der flachen Schaltung, die durch den oberen (8) und unteren (10) rohrförmigen elektrischen Widerstand und die Rückwand (5) des Garraums (2) begrenzt sind, doppelt so groß ist wie der Durchmesser (D) des oberen (8) und unteren (10) rohrförmigen elektrischen Widerstands.

## Revendications

1. Structure de four électrique ménager, en particulier pour les pizzas, **caractérisée en ce qu'**elle comprend des résistances électriques tubulaires (8, 10), avec une alimentation électrique indépendante réglable et des capteurs thermiques indépendants séparés (9, 11) directement placés dans la chambre de cuisson (2), au moins un capteur et une résistance tubulaire (8, 9) placés à l'intérieur de la chambre de cuisson (2) près de la partie supérieure du four (6) et au moins un capteur et une résistance tubulaire (10, 11) sur la partie inférieure du plancher (7), au-dessus de laquelle est suspendue, par le biais de moyens de retenue sur les parois (3, 4, 5) et/ou sur la partie inférieure (7), une tôle réfractaire (15) soutenue par des rayonnages latéraux (12) respectifs mutuellement symétriques et/ou coplanaires et dotés de fentes (13) créées sur les parois latérales (4) et/ou inférieure (5) et/ou avant au-dessus de la résistance électrique tubulaire inférieure (10) au niveau du plancher (7), dans laquelle la tôle réfractaire (15) est détachée des parois (3, 4, 5) de la chambre de cuisson (2) par un interstice ouvert des rayonnages latéraux (12) et détachée de la partie inférieure (7) par un interstice (14), dans laquelle la résistance électrique tubulaire (10) est logée dans ledit interstice (14).

2. Structure de four électrique ménager selon la revendication 1, **caractérisée en ce que** la tôle réfractaire (15) est détachée de la partie inférieure (7) par l'interstice (14) ne dépassant pas trois fois l'épaisseur de cette dernière, lesdites résistances électriques tubulaires (8, 10) étant formées par un segment continu (16) orienté vers l'extension du compartiment d'ouverture de la porte (3) de la chambre de cuisson (2) à une proximité tangentielle des boucles (17) du circuit plat défini par les résistances (8, 10).

3. Structure de four électrique ménager selon la revendication 1 ou 2, **caractérisée en ce qu'**elle comprend les éléments suivants :
- la chambre de cuisson (2) fermée, au niveau de la partie avant, par une porte (3) définie par des parois latérales (4) et une paroi arrière (5), avec une hauteur entre la partie supérieure du four (6) et la partie inférieure (7) correspondant sensiblement à celle des fours électriques ménagers polyvalents habituels pour la cuisson de produits alimentaires ;
- au moins la résistance électrique tubulaire supérieure (8) logée en suspension près de la partie supérieure (6) de la chambre de cuisson (2) alimentée électriquement de façon autonome via un contrôle manuel et/ou assistée par une logique informatisée sur des paramètres comprenant les détections d'un capteur thermique supérieur (9) ;
- au moins une résistance électrique tubulaire inférieure (10) logée en suspension près de la partie inférieure (7) de la chambre de cuisson (2) alimentée électriquement de façon autonome via un contrôle manuel et/ou assistée par une logique informatisée sur des paramètres comprenant les détections d'un capteur thermique inférieur (11) et interpolés dans une combinaison avec des paramètres et des détections de la résistance électrique tubulaire supérieure (8) et du capteur thermique supérieur (9) ;
- des rayonnages latéraux (12) respectifs mutuellement symétriques et/ou coplanaires et dotés de fentes (13) créées sur les parois latérales (4) et/ou inférieure (5) et/ou avant au-dessus de la résistance électrique tubulaire blindée inférieure (10) au niveau du plancher (7) modelées pour soutenir une tôle (15) en matière réfractaire.

4. Structure de four électrique ménager selon l'une quelconque des revendications précédentes, **caractérisée en ce que**, au-dessous de la résistance électrique tubulaire supérieure (8) proche de la partie supérieure du four (6) de la chambre de cuisson (2), une tôle (15) en matière réfractaire est suspendue.

5. Structure de four électrique ménager selon l'une quelconque des revendications précédentes, **caractérisée en ce que** :
- ladite tôle (15) en matière réfractaire est détachée de la partie inférieure du plancher (7) par un interstice (14) composé d'un double fond ne dépassant pas trois fois l'épaisseur (X) de ce dernier et, idéalement, n'en dépassant pas deux fois l'épaisseur ;
- le diamètre (D) de la résistance inférieure sous-jacente (10) logée dans le double fond ouvert (14) est de préférence, de la moitié jusqu'à la hauteur de l'épaisseur (X) de la tôle (15), composé de matière réfractaire.

6. Structure de four électrique ménager selon l'une quelconque des revendications précédentes, **caractérisée en ce que** lesdites résistances électriques tubulaires supérieures (8) et lesdites résistances électriques tubulaires blindées inférieures (10) sont modelées par un segment continu (16) orienté vers l'extension du compartiment d'ouverture de la porte (3) de la chambre de cuisson (2) à une proximité tangentielle des boucles (17) inférieures du circuit plat défini par les résistances électriques tubulaires supérieures (8) et inférieures (10).

7. Structure de four électrique ménager selon l'une quelconque des revendications précédentes, **caractérisée en ce que** dans lesdites résistances électriques tubulaires supérieures (8) et lesdites résistances électriques tubulaires inférieures (10), le segment continu (16) orienté vers l'extension du compartiment d'ouverture de la porte (3) de la chambre de cuisson (2) est détaché des boucles (17) des résistances électriques tubulaires supérieures (8) et inférieure (10) par une fois et demi le diamètre (D) des résistances électriques tubulaires supérieures (8) et inférieures (10).

8. Structure de four électrique ménager selon l'une quelconque des revendications précédentes, **caractérisée en ce que** dans lesdites résistances électriques tubulaires supérieures (8) et lesdites résistances électriques tubulaires inférieures (10), l'interstice entre les segments parallèles (18) connectés aux boucles (17) consécutives correspond à cinq fois le diamètre (D) des résistances électriques tubulaires supérieures (8) et inférieures (10).

9. Structure de four électrique ménager selon l'une quelconque des revendications précédentes, **caractérisée en ce que** dans lesdites résistances électriques tubulaires supérieures (8) et lesdites résistances électriques tubulaires inférieures (10), l'interstice entre les boucles (17) arrière du circuit plat défini par les résistances électriques tubulaires supérieures (8) et inférieures (10) et la paroi arrière (5) de la chambre de cuisson (2) correspond à deux fois le diamètre (D) des résistances électriques tubulaires supérieures (8) et inférieures (10).
